(19) **Europäisches Patentamt / European Patent Office / Office européen des brevets**

(11) **EP 2 622 310 B2**

(12) **NOUVEAU FASCICULE DE BREVET EUROPEEN**
Après la procédure d'opposition

(45) Date de publication et mention de la décision concernant l'opposition:
**05.12.2018 Bulletin 2018/49**

(45) Mention de la délivrance du brevet:
**07.10.2015 Bulletin 2015/41**

(21) Numéro de dépôt: **11773760.1**

(22) Date de dépôt: **23.09.2011**

(51) Int Cl.:
**G01D 5/353** *(2006.01)*

(86) Numéro de dépôt international:
**PCT/FR2011/052217**

(87) Numéro de publication internationale:
**WO 2012/042154 (05.04.2012 Gazette 2012/14)**

(54) **CAPTEUR DE POSITION AMÉLIORÉ**

VERBESSERTER POSITIONSSENSOR

IMPROVED POSITION SENSOR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.09.2010 FR 1057847**

(43) Date de publication de la demande:
**07.08.2013 Bulletin 2013/32**

(73) Titulaire: **Moving Magnet Technologies**
**25000 Besançon (FR)**

(72) Inventeurs:
• **DELBAERE, Michaël**
 **F-25720 Avanne - Aveney (FR)**
• **DORGE, Thierry**
 **F-25610 Arc et Senans (FR)**
• **FRACHON, Didier**
 **F-25000 Besançon (FR)**
• **MASSON, Gérald**
 **F-25000 Besançon (FR)**

(74) Mandataire: **IP Trust**
 **2, rue de Clichy**
 **75009 Paris (FR)**

(56) Documents cités:
**DE-U1- 20 210 548  FR-A1- 2 893 409**
**FR-A1- 2 893 410  FR-A1- 2 923 903**

EP 2 622 310 B2

## Description

### Domaine de l'invention

La présente invention concerne le domaine des systèmes de position absolue à capteur magnétique, destinés à fournir une information précise de la position linéaire ou angulaire. De tels systèmes de mesure, requérant une grande robustesse et une grande précision, sont en particulier utilisés dans l'industrie automobile.

### Etat de la technique.

On connaît dans l'état de la technique une solution décrite dans le brevet américain US7741839 présentant le principe général d'un capteur de position absolue mettant en oeuvre un aimant générant un champ continument variable et un capteur magnétique délivrant deux signaux électriques représentatifs des composantes magnétiques de forme sinusoïdale afin de déterminer la position relative de l'aimant et du capteur. Ce brevet propose de procéder à un calcul d'arctangente du rapport entre les signaux délivrés par les deux capteurs pour fournir une position approximative de l'aimant mobile. De cette façon, on mesure directement l'angle du champ magnétique au point de mesure.

La précision du signal ainsi déterminé n'est pas satisfaisante car, dans le cas général, les deux composantes du champ magnétique ont des amplitudes très différentes. En conséquence, l'angle du champ magnétique calculé par l'arctangente et l'évolution de la position ne sont pas proportionnel, conduisant alors à de grandes imprécisions sur la connaissance de la position. Les configurations géométriques permettant d'obtenir une égalité entre les composantes sont limitées ou requièrent un impact significatif sur l'encombrement tel que décrit par exemple dans le brevet US7030608.

Afin d'améliorer la précision, on a proposé dans le brevet français FR2893410 une solution consistant à appliquer au rapport des signaux délivrés par les capteurs un coefficient de gain, et une sonde comprenant deux paires d'éléments de Hall associés à un concentrateur de flux. Ce brevet de l'art antérieur décrit un capteur comprenant un aimant de forme cylindrique aimanté suivant son diamètre. Des éléments de détection sont situés en périphérie de l'aimant et captent l'évolution des composantes tangentielle et radiale du champ magnétique. Afin de pouvoir décoder l'angle de rotation effectif du capteur, il est appliqué un gain correctif égal au rapport des amplitudes maximales de la tension issue de la composante tangentielle sur la tension issue de la composante radiale. Ainsi, la non-linéarité du signal obtenu est améliorée. Cependant, la configuration est limitée au cas de la bague aimantée diamétralement.

Cette solution a été complétée par l'invention décrite dans le brevet français EP1989505. Ce brevet décrit un capteur linéaire ou rotatif présentant un aimant dont la variation de la direction de l'aimantation au sein de l'aimant est variable linéairement. De cette façon, toujours en appliquant un facteur de normalisation égal au rapport des amplitudes entre la tension issue des champs radial et tangentiel, il est possible, via un calcul d'arctangente, de déterminer le déplacement angulaire ou linéaire de la sonde relativement à l'aimant. Cependant, dans de nombreux cas, notamment le cas où les harmoniques de magnétisation sont importantes ou bien lorsque l'aimantation réalisée dans le matériau n'évolue pas suivant une période entière, l'application de ce simple rapport ne permet pas d'obtenir une précision suffisante sur l'information de position.

### Inconvénient de l'art antérieur

L'information de position fournie par les capteurs de l'art antérieur n'est pas totalement satisfaisante, car il apparaît que les non linéarités des signaux magnétiques et électriques conduisent à une précision insuffisante en regard des contraintes imposées désormais par l'industrie.

En effet, dans la pratique, les signaux réellement mesurés ne sont pas purement sinusoïdaux, mais présentent un contenu harmonique qui peut être important. On peut alors écrire chacune des composantes magnétiques selon les formules suivantes :

$$B_1 = \sum_i a_i \, . \sin\left(i.\theta\right)$$

$$B_2 = \sum_i b_i \, . \cos\left(i.\theta\right)$$

Avec,

- B1 désigne une composante magnétique normale à la direction de déplacement et générée par un aimant,
- B2 désigne une composante magnétique tangentielle, en quadrature, générée par l'aimant,
- θ désigne l'angle électrique, c'est-à-dire la position angulaire sur la période du signal considéré. C'est ce que l'on cherche à connaître et qui est proportionnel à la position de la sonde par rapport à l'aimant, à ne pas confondre avec l'angle magnétique au point de mesure qui est défini comme l'angle entre les deux vecteurs correspondant aux deux composantes considérées,
- $a_i$ désigne l'amplitude des différentes harmoniques qui constituent le signal $B_1$,
- $b_i$ désigne l'amplitude des différentes harmoniques qui constituent le signal $B_2$,
- i désigne le rang de l'harmonique.

Les harmoniques du signal proviennent de différentes perturbations, et en particulier :

- les effets de bords intrinsèques à la géométrie de l'aimant, et se produisant principalement aux extrémités de la course utile. Ces effets de bords sont d'autant plus importants que la dimension de l'aimant dans le sens de déplacement est proche de la course utile voire inférieure. Ces effets pourraient être diminués par le choix d'un aimant de grande dimension, mais cela va à l'encontre d'une miniaturisation et d'une réduction des coûts recherchées,
- les imperfections du processus d'aimantation. La réalisation d'une aimantation dont la direction varie continument peut poser des difficultés liées à la fabrication de l'outil d'aimantation. Il est, par exemple, difficile de réaliser une aimantation variant de manière parfaitement linéaire selon la direction de déplacement, et les dérives conduisent à des harmoniques du signal électrique mesuré par les éléments à effet Hall,
- la perméabilité relative de l'aimant : cette perméabilité relative n'est pas totalement identique à celle de l'air, ce qui produit des phénomènes parasites de diffraction entre l'aimant et l'air, déformant le champ magnétique local détecté par les éléments à effet de Hall,
- l'inhomogénéité de l'aimant : lorsque l'on travaille avec certains types d'aimants, particulièrement des aimants liés, la matière est quelquefois inhomogène, conduisant à des propriétés magnétiques disparates et induisant des déformations du champ magnétique local,
- un mauvais alignement des éléments de Hall détectant les composantes du champ magnétique.

Ainsi, l'art antérieur se place dans le cas de configurations où le contenu harmonique est faible ou inexistant et où les signaux se résument à l'expression d'un fondamental. Les composantes B1 et B2 décrites plus haut deviennent alors :

$$B_1 = a_1.\sin(\theta)$$

$$B_2 = b_1.\cos(\theta)$$

L'accès à l'angle électrique se fait alors simplement en faisant le quotient de B1 sur B2 qui permet d'aboutir à la formule suivante :

$$\theta = \text{Atan} \left(\frac{b_1}{a_1}.\frac{B_1}{B_2}\right)$$

La connaissance de l'angle électrique en tout point du déplacement du capteur permet ainsi d'accéder à l'information de position absolue de ce dernier.
De manière générale, lorsque le signal est une sinusoïde déformée et non purement sinusoïdal pour les raisons décrites ci-dessus, le fait de travailler à une faible distance entre la surface de l'aimant et la sonde de mesure, c'est-à-dire proche de l'aimant, amplifie le contenu harmonique. Plus on s'éloigne de l'aimant, plus son contenu harmonique est faible. Cependant, lorsque l'on veut travailler avec un aimant le plus petit possible, les effets de bord peuvent induire un contenu harmonique important même lorsque cet entrefer de mesure est important. La formule donnée par l'art antérieur fournissant l'angle électrique se révèle insuffisante.
L'homme du métier a tenté d'améliorer la précision par des solutions telles que des post-traitements de l'information, par exemple en appliquant une table de correction permettant un traitement numérique de linéarisation. Cette solution entraine un surcoût et un manque de robustesse du système, sensible aux variations mécaniques et aux tolérances de positionnement, et en particulier de variation de distance entre l'aimant et la sonde. Certains des paramètres cités plus haut évoluent dans le temps, et une compensation par un post-traitement seul conduit à une dérive fonction du vieillissement du capteur.
Une autre solution proposée dans le brevet FR2893410 consiste à compenser les défauts de linéarité par une forme non constante de l'aimant, par exemple par une section elliptique et non pas circulaire. Cette solution implique un procédé de fabrication plus complexe.
Une autre solution est d'appliquer des coefficients de correction par secteur de courbe afin d'améliorer, zone par zone et de façon itérative, la linéarité du capteur. Cependant, ceci nécessite des ressources électroniques supplémentaires et constitue, de plus, une solution peu robuste aux tolérances conduisant à une solution qui évolue mal dans le temps.

### Solution apportée par l'invention

L'objet de la présente invention est de remédier à ces inconvénients en proposant un système de mesure absolue présentant une précision améliorée par rapport aux capteurs de l'état de la technique, sans nécessiter de post-traitements ni d'aimant de configuration particulière. Bien entendu, il est possible d'appliquer au système de mesure selon l'invention des traitements additionnels, mais intrinsèquement, le système de mesure selon l'invention présente une précision supérieure à celle des capteurs de l'art antérieur.
Il est précisé que le terme de « position absolue » au sens du présent brevet s'étend à un système de mesure multi-périodique. La position absolue concernera alors la position absolue sur une période, l'information sur le quantième de la période étant déterminée par un moyen additionnel.
Avantageusement, la présente invention permet notamment à l'homme de métier de réaliser des capteurs robustes et permet, dans le cas d'aimants de forme parallélépipédique, ou en secteur angulaire ou de tuile, de minimiser la taille de l'aimant par rapport à la course avec la possibilité d'obtenir un aimant sensiblement plus petit que la course tout en gardant une très bonne linéarité.

Avantageusement, la présente invention permet à l'homme de métier de travailler aussi bien avec des entrefers de mesure faible, là où le contenu harmonique est très important, que grand.

En effet, dans ce cas, le contenu harmonique est certes plus faible mais les effets de bord peuvent induire un contenu harmonique important quand l'aimant est plus petit que la course mesurée.

Dans les différents cas cités ici, le contenu harmonique est non négligeable.

L'invention concerne selon son acception la plus générale un système de mesure de position absolue conforme à la revendication 1.

Description détaillée d'exemples de réalisation

La présente invention sera mieux comprise à la lecture de la description d'exemples de réalisation non limitatifs, se référant aux dessins annexés où :

- la figure 1 représente une vue schématique d'un système de mesure comprenant un aimant parallélépipédique présentant une aimantation dont la direction varie continument
- la figure 2 représente les inductions magnétiques mesurées au voisinage de l'aimant de la figure 1
- les figures 3a, 3b et 3c présentent l'angle électrique calculé et les résultats de non-linéarité obtenus selon le type de coefficient appliqué au rapport des inductions de la figure 2,
- la figure 4 montre un tableau récapitulant, pour un aimant parallélépipédique, les performances et paramètres correctifs à appliquer pour des cas où l'aimantation est tangente au milieu de l'aimant
- la figure 5 montre un tableau récapitulant, pour un aimant parallélépipédique, les performances et paramètres correctifs à appliquer pour des cas où l'aimantation est normale au milieu de l'aimant
- les figures 6a, 6b et 6c représentent respectivement une vue schématique d'un système de mesure comprenant un aimant disque, les inductions au point de mesure et les résultats en termes de non-linéarité
- la figure 7a, 7b et 7c représentent respectivement une vue schématique d'un système de mesure comprenant un aimant tubulaire, les inductions au point de mesure et les résultats en termes de non-linéarité
- les figures 8a et 8b représentent respectivement une vue schématique d'un premier système de mesure comprenant une tuile et les résultats en termes de non-linéarité
- les figures 9a et 9b représentent respectivement une vue schématique d'un deuxième système de mesure comprenant une tuile et les résultats en termes de non-linéarité
- la figure 10 représente une vue schématique d'un troisième système de mesure comprenant une tuile
- la figure 11 représente une vue schématique d'un système de mesure comprenant une bague multi-périodique
- la figure 12 représente une vue schématique d'un système de mesure comprenant un aimant à aimantation à direction unique mais d'intensité variable selon la direction de déplacement.

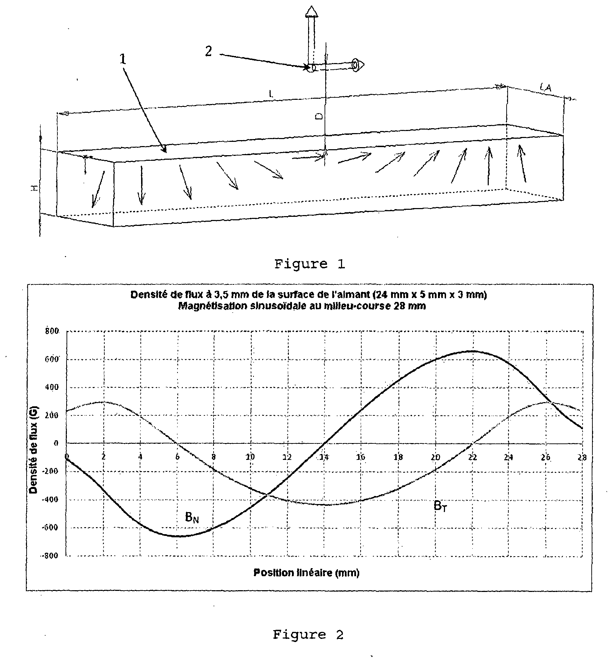

La figure 1 représente la vue schématique d'un premier exemple de réalisation d'un système de mesure de position absolue linéaire, à aimant (1) parallélépipédique. Dans cet exemple, il s'agit de réaliser un capteur de position linéaire sur une course de 28 mm avec un aimant (1) de longueur (L) plus petite, fixée à 24 mm. L'intérêt est ainsi un gain de matière et d'encombrement et donc de coût et de masse. Sur cette figure 1, l'aimant (1) est de largeur (LA) 5 mm et de hauteur (H) 3 mm. Il est à noter, que la largeur et la hauteur de l'aimant (1) n'ont que peu d'influence sur le contenu harmonique, et vont simplement influencer l'amplitude des signaux obtenus. Cet aimant (1) est aimanté avec une direction d'aimantation continument variable à l'intérieur de l'aimant sur un angle voisin de 180°. Cet angle a été déterminé analytiquement comme celui permettant d'obtenir les meilleurs résultats en termes de non-linéarité. Au-dessus de cet aimant (1), à la distance (D) de 3.5 mm de la surface supérieure, se situe une sonde (2) contenant des moyens de détection magnétosensible capables de détecter l'amplitude $B_t$ et $B_n$ du champ magnétique sur deux axes perpendiculaires, étant respectivement la composante tangentielle et une composante normale du champ magnétique, définies par rapport à la direction de déplacement, en ce point de l'espace. Il est à noter qu'on peut très bien imaginer décaler ledit moyen de détection du plan de symétrie de l'aimant (1) selon la dimension (LA) dans le but d'exploiter les composantes magnétiques tangentielle et axiale plutôt que tangentielle et normale.

La figure 2 montre les résultats de mesure d'induction, dans le cas de la figure 1, des composantes normale ($B_N$) et tangentielle ($B_T$) de champ magnétique au point où est positionné l'aimant (1) en fonction de la position relative de la sonde par rapport aux éléments de Hall des moyens de détection (2).

Dans cette configuration, les signaux tangentiel et normal sont sensiblement différents de deux sinus déphasés de 90° car le contenu harmonique est fort, notamment du fait des effets de bord mais plus généralement selon les diverses raisons exposées précédemment.

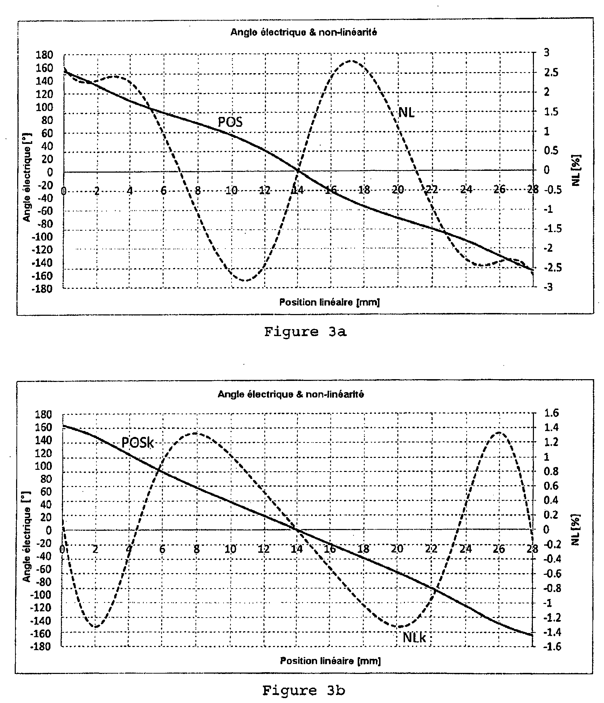

De fait, si on calcule la position sur la base d'un calcul d'arctangente entre les deux composantes (tel que décrit dans US7741839), comme montré en figure 3a, ou si l'on applique au préalable un coefficient k égal au ratio des amplitudes Vmaxt/Vmaxn, tel que décrit dans EP1989505, comme montré en figure 3b, cela conduit à des imprécisions importantes.

Sur la figure 3a, la courbe POS représente l'angle électrique calculé, image de la position, à partir du calcul d'arctangente appliqué au rapport des signaux de la figure 2, sans application de gain. Le signal NL représente la non-linéarité du signal POS en fonction de la position mécanique réelle. Comme on peut le voir, les résultats sont mauvais puisque la non-linéarité obtenue sur le signal est de +/-2.8%.

Sur la figure 3b, le gain appliqué aux composantes normale et tangentielle, avant calcul d'arctangente, est égal au rapport des amplitudes de ces composantes. Selon la figure 2, en prenant 433 Gauss comme l'amplitude du signal tangentiel et 660 Gauss comme amplitude du signal normal, cette valeur de gain est donc voisine de 0.65 (433/660). Appliqué au rapport des composantes sur la course et à travers le calcul d'arctangente, la position calculée, POSk, avec ce rapport présente une non-linéarité, notée NLk, de +/-1.3%. Dans beaucoup d'applications, une telle non-linéarité n'est pas acceptable. L'homme de métier aura donc tendance à corriger cette non-linéarité grâce aux différentes techniques décrites plus hauts.

Pour ce faire, on applique le calcul d'arc tangente non pas au rapport des signaux électriques détectés par les éléments à effet de Hall, ni à des signaux pondérés par le simple rapport k des amplitudes Vmaxt/Vmaxn, mais par des signaux pondérés d'un coefficient de gain G spécifique à l'invention.

En effet, dans le cas où ces signaux électriques sont des sinusoïdes déformées et non de pures sinusoïdes, ce coefficient de gain, bien qu'éventuellement proche du rapport des amplitudes Vmaxt/Vmaxn, est toujours différent de ce rapport. La valeur exacte de ce coefficient est déterminée par un algorithme d'optimisation appliqué aux données simulées de position magnétique calculée et de position mécanique réel. On procède à une minimisation des écarts entre les valeurs de position magnétique et de position mécanique, pour déterminer le coefficient de gain G qui sera retenu pour le moyen de calcul du système de mesure.

Dans le cas où l'on ne peut obtenir par simulation les champs d'induction ou lorsqu'il s'agit de corriger un défaut de positionnement des sondes, on procède alors, sur prototype, à une mesure des composantes en fonction la position mécanique réelle, cette position mécanique étant mesurée à l'aide d'un capteur de position étalon. On procède alors, de même que précédemment, à une minimisation des écarts entre les valeurs de position magnétique calculés par arctangente du rapport Vn/Vt et les valeurs de position mécanique, pour déterminer le coefficient de gain G qui sera retenu pour le moyen de calcul du système de mesure.

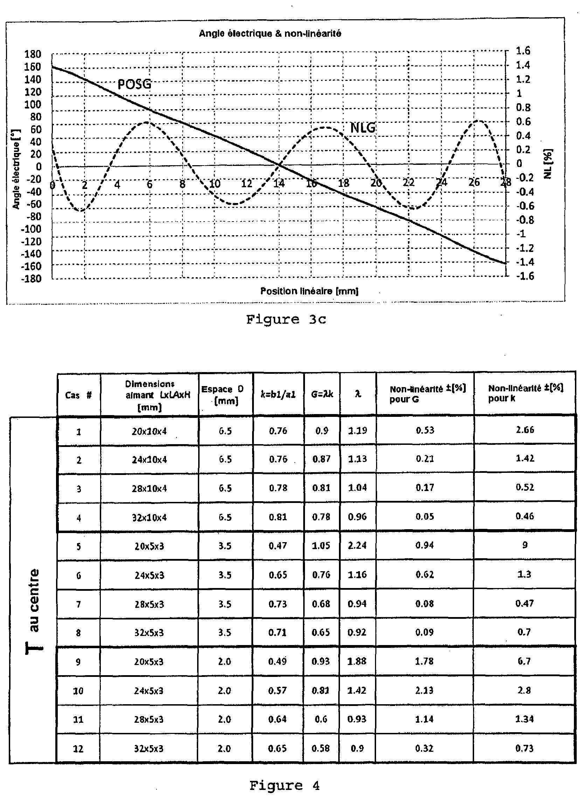

La figure 3c représente les résultats en termes de signal de sortie et non-linéarité de ce signal, toujours dans le cas exemple de la figure 1, mais en application de la méthode proposée dans l'invention. Le signal POSG représente le signal obtenu par calcul d'arctangente du rapport des tensions images des composantes tangentielle et normale auquel on a appliqué un gain G. Si on applique un gain G égal à 0.76, la non-linéarité du signal de position obtenu, notée NLG, est ainsi abaissée à +/-0.62%, soit une valeur 2 fois plus faible que celle obtenue avec le seul gain du rapport des amplitudes.

L'exemple lié à la réalisation de la figure 1 n'est nullement limitatif, des dimensions d'aimants et conditions de mesure différentes impliquent une valeur corrective de gain différente.

Les différents essais qui ont été menés montrent que ce gain G évolue soit en-dessous de la valeur k du rapport des amplitudes dans une gamme allant de 0.4k à 0.98 k, soit au-dessus de la valeur de k dans une gamme allant de 1.02k à 2.5 k, sachant que si le contenu harmonique est non négligeable, le coefficient G sera très différent de k.

La figure 4 montre un tableau récapitulant des essais réalisés pour une recherche d'un capteur de position linéaire de course 28 mm dans le cas où la direction d'aimantation est tangente au milieu de l'aimant parallélépipédique afin de montrer l'évolution des résultats et la différence avec le gain k préconisé par l'art antérieur et le gain correctif G optimum à appliquer au rapport des composantes normale et tangente dans le but d'obtenir le meilleur résultat en termes de non-linéarité du signal obtenu sur la course. La première colonne « dimensions » montre les dimensions des différents cas géométriques considérés. Il s'agit à chaque fois d'un aimant parallélépipédique dont la longueur évolue de 20 mm à 32 mm. La deuxième colonne « air gap » expose l'entrefer ou la distance (D) de mesure entre la surface de l'aimant et les moyens de détection. La troisième colonne montre l'évolution du coefficient k tel que calculé selon les enseignements de l'art antérieur correspond au rapport des amplitudes tangentielle ($b_1$) et normale ($a_1$). La quatrième colonne montre l'évolution du coefficient G préconisé par la présente invention et égal à $\lambda$ fois la valeur de k. La cinquième colonne expose la valeur de $\lambda$. La sixième colonne montre la valeur de la non-linéarité obtenue sur la course de 28 mm en prenant le coefficient correcteur G alors que la septième colonne montre la non-linéarité obtenue sur la course de 28 mm obtenue en prenant le coefficient correcteur k de l'art antérieur.

Tous ces cas concrets, exemples non limitatifs mais typiques, montrent que, pour chacun d'eux, la non-linéarité obtenue avec le coefficient k de l'art antérieur peut être sensiblement amélioré en utilisant le coefficient G strictement différent de k.

Ce tableau de la figure 4 montre notamment qu'il est possible de réaliser un capteur dont la longueur est bien inférieure à la course tout en assurant une très bonne linéarité. En prenant l'exemple « case #5 », la longueur de l'aimant est de 20 mm soit bien inférieure à la course de 28 mm. En utilisant le coefficient correcteur k préconisé par l'art antérieur de 0.47, la meilleure non-linéarité obtenue est de +/-9%. Cette valeur est incompatible avec les spécifications industrielles. En utilisant un coefficient correcteur G de 1.05, la meilleure non-linéarité obtenue est alors de +/-0.94%. L'art antérieur interdisait l'utilisation d'une telle configuration où l'aimant est bien plus petit que la course, alors que, à l'aide du coefficient correcteur préconisé par l'invention, il est possible de rendre la solution viable.

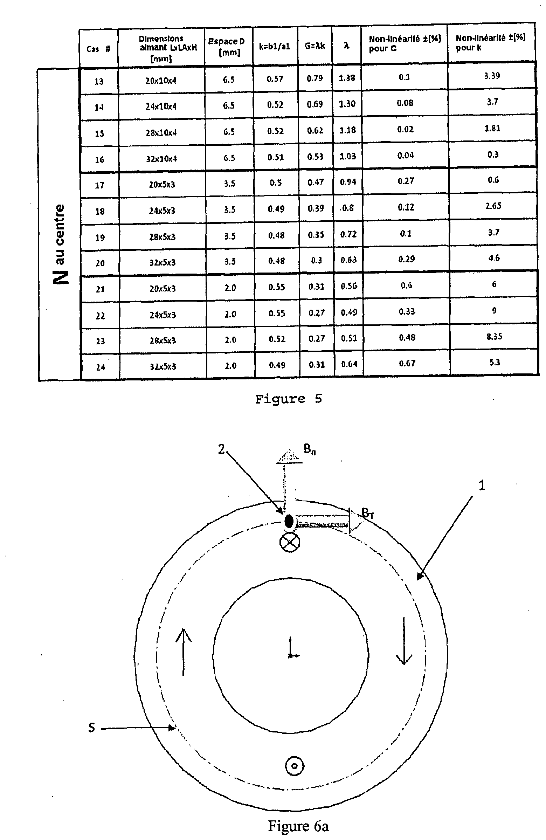

La figure 5 montre un tableau récapitulant des essais réalisés pour une recherche d'un capteur de position linéaire de course 28 mm dans le cas où la direction d'aimantation est normale au milieu de l'aimant parallélépipédique. Les mêmes colonnes que celles déjà montrées dans le tableau de la figure 4 sont visibles sur ce tableau. Le lecteur pourra ainsi observer l'influence et l'intérêt de réaliser une aimantation normale ou tangente au milieu de l'aimant (1) en fonction des cas réalisés.

Par exemple, prenons le « case #14 ». Il s'agit d'un aimant (1) de longueur 24 mm, donc plus petit que la course, pour lequel la distance de mesure est de 6.5 mm au-dessus de l'aimant, soit une distance relativement importante. En utilisant le coefficient correcteur k préconisé par l'art antérieur de 0.52, la meilleure non-linéarité obtenue est de +/-3.7%. Cette valeur est incompatible avec la plupart des spécifications industrielles. En utilisant un coefficient correcteur G, 1.30 fois plus important soit égal à 0.69, la meilleure non-linéarité obtenue est alors de +/-0.08%. En regardant le tableau de la figure 4 relatif aux cas où la direction d'aimantation est tangente au milieu, nous voyons que le meilleur résultat obtenu est de +/-0.21% pour un coefficient G de 0.87. Ainsi, en réalisant une aimantation normale au milieu de l'aimant (1), nous obtenons un capteur dont la taille de l'aimant (1) est minimisée tout en gardant la possibilité de travailler à une grande distance de l'aimant et en assurant une non-linéarité minimale et compatible avec les spécifications les plus sévères.

Toujours dans le tableau de la figure 5, prenons un autre exemple de réalisation. Le « case #20 » qui représente un cas où l'aimant est plus grand que la course (longueur 32 mm). En travaillant à une distance de 3.5 mm de l'aimant, nous pouvons améliorer la non-linéarité passant de +/-4.6% pour le cas d'un coefficient k de 0.48 à une non-linéarité de +/-0.29% pour un coefficient correctif G de 0.3. Il est ainsi possible de réaliser un capteur de précision améliorée même quand l'aimant est de longueur plus importante que la course.

Ce tableau de la figure 5 permet avantageusement de déterminer un cas particulièrement optimal où les contraintes sont sévères. Le « case #21 » correspond à un cas où l'entrefer de mesure est faible (2 mm), et où l'aimant (1) est de longueur bien plus petite que la course (20 mm pour une course de 28 mm). Dans ce cas, les effets de bord sont importants et la proximité entre la sonde (2) et l'aimant (1) font que le contenu harmonique est très riche. Avec un coefficient correcteur k de l'art antérieur de 0.55, la meilleure non-linéarité obtenue est de +/-6% alors que la non-linéarité obtenue avec un coefficient correctif G de 0.31, vaut +/-0.6%. Nous avons ainsi réalisé un capteur de grande précision avec un aimant de petite taille et en travaillant à faible entrefer de mesure.

La figure 6a représente la vue schématique d'un premier exemple de réalisation d'un système de mesure de position absolue angulaire, à aimant disque.

L'aimantation, dont la direction varie continuement selon l'épaisseur de l'aimant (1), réalise une rotation de 360°. La sonde est positionnée sur le cercle noté (S), concentrique à l'aimant (1) et au-dessus de l'aimant (1), et représentant le chemin virtuel sur lequel se déplace la sonde (2) par rapport à l'aimant (1) ou l'aimant (1) par rapport à la sonde (2). Les composantes utilisées pour le calcul de la position absolue sont les composantes électriques tangentielle et normale, notées Vt et Vn, images des composantes magnétiques $B_t$ et $B_n$.

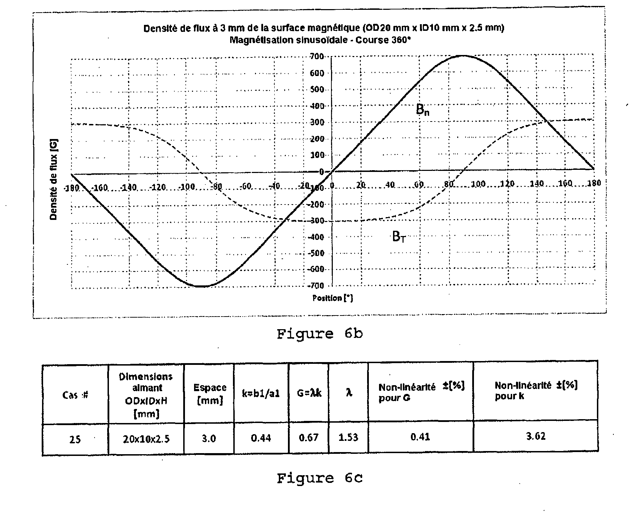

Sur la figure 6b, on représente sur 360° de course angulaire mécanique les composantes $B_t$ et $B_n$ vues par la sonde (2) positionnée à une distance (D) de 3 mm de la surface dans le cas d'un aimant (1) de diamètre extérieur 20 mm, de diamètre intérieur 10 mm et d'épaisseur 2.5 mm. On remarque que ces signaux contiennent une harmonique de rang i=3 qui a tendance à générer une déformation triangulaire et trapézoïdale selon la composante.

Sur la figure 6c, on peut à nouveau constater l'apport du coefficient G tel que revendiqué par l'invention qui permet d'obtenir une non-linéarité du capteur de +/-0.4% contre +/-3.6% selon la proposition de l'art antérieur. Le coefficient appliqué est alors de 0.67 contre 0.44 pour le simple rapport des amplitudes des 2 signaux.

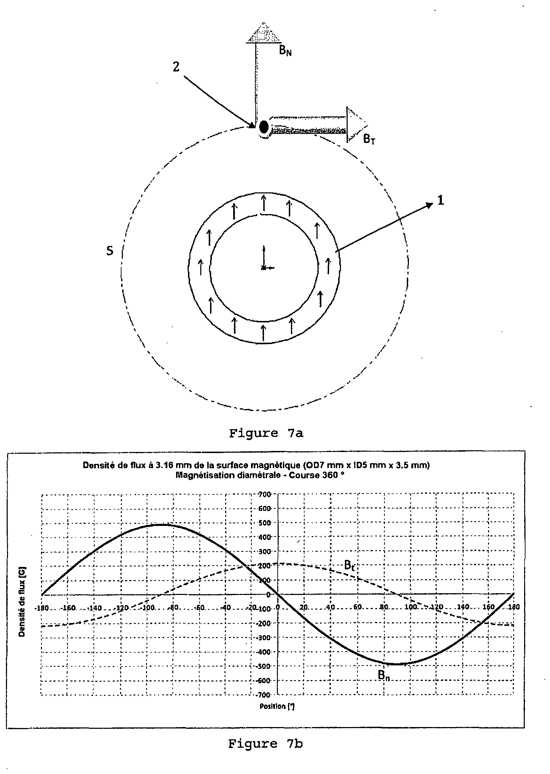

La figure 7a représente la vue schématique d'un premier exemple de réalisation d'un système de mesure de position absolue angulaire, à aimant (1) tubulaire.

L'aimantation dont la direction, vue par la sonde (2), varie continument à l'intérieur de l'aimant (1) réalise une rotation de 360° sur la course angulaire complète de 360°. La sonde (2) est positionnée sur la trajectoire en forme de cercle noté (S), concentrique à l'aimant (1) et positionné avantageusement dans la hauteur (H) de l'aimant (1). Les composantes utilisées pour le calcul la position absolue sont les composantes électriques tangentielle et normale notées Vt et Vn, images des composantes magnétiques $B_t$ et $B_n$. Selon l'altitude du diamètre de lecture (S), on peut avantageusement choisir les composantes axiale (Va) et tangentielle (Vt) pour des raisons d'amplitude d'induction ou de précision du capteur.

Sur la figure 7b, on représente sur 360° de course angulaire mécanique les composantes Bt et Bn vue par la sonde (2) positionnée à une distance (D) de 3.16 mm de la surface dans le cas d'un aimant (1) de diamètre extérieur 7 mm, de diamètre intérieur 5 mm et d'épaisseur 3.5 mm. On remarque le très faible contenu harmonique de ces courbes qui, à première vue, ont un profil parfaitement sinusoïdal.

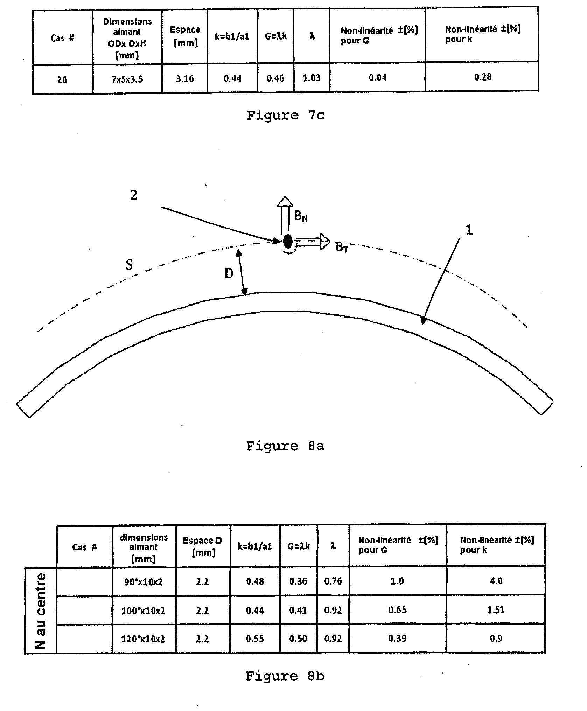

Sur la figure 7c, on peut cependant constater que, bien que la différence entre le coefficient (G) revendiqué et le coefficient (k) de l'art antérieur soit faible puisqu'égal à 1.03 du fait d'un contenu harmonique faible principalement dû à la géométrie de l'outil d'aimantation et à la perméabilité de l'aimant, son apport est bien notable avec une non-linéarité du capteur qui est améliorée de +/-0.3% à +/-0.04%.

La figure 8a représente la vue schématique d'un premier exemple de réalisation d'un système de mesure de position absolue angulaire, à aimant tuile.

La direction d'aimantation varie continument à l'intérieur de l'aimant (1) suivant la direction de déplacement et la course angulaire étudiée complète est de 80°. La sonde (2) est positionnée devant l'aimant (1) sur une trajectoire (S) correspondant à un diamètre plus important que le diamètre extérieur de l'aimant (1), concentrique à l'aimant (1) et positionné avantageusement dans la hauteur (H) de l'aimant (1). Les composantes utilisées pour le calcul la position absolue sont les composantes électriques tangentielle et normale notées Vt et Vn, images des composantes magnétiques Bt et Bn. Selon l'altitude du diamètre de lecture (S), on peut avantageusement choisir les composantes axiale (Va) et tangentielle (Vt) pour des raisons d'amplitude d'induction ou de précision du capteur.

Sur la figure 8b, on peut constater les améliorations apportées par l'utilisation du gain G de l'invention par rapport à l'utilisation du coefficient k de l'art antérieur. Pour une longueur angulaire d'aimant (1) de 90°, 100° et 120°, la meilleure non-linéarité obtenue passe respectivement de +/-4% à +/-1%, de +/-1.51% à +/-0.65% et de +/-0.9% à +/-0.39%.

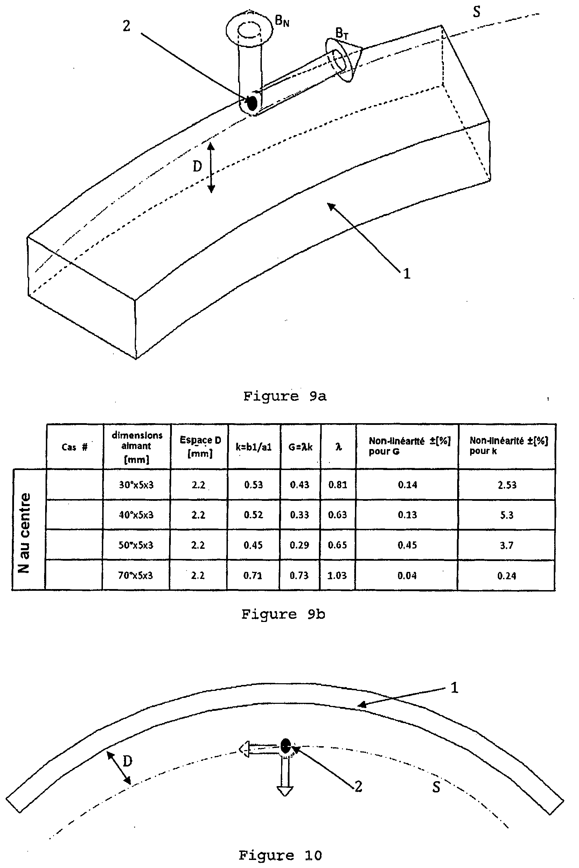

La figure 9a représente la vue schématique d'un deuxième exemple de réalisation d'un système de mesure de position absolue angulaire, à aimant tuile.

La direction d'aimantation varie continument à l'intérieur de l'aimant (1) selon le sens de déplacement et la course angulaire complète étudiée est de 40°. La sonde (2) est positionnée devant l'aimant (1), à la distance (D) de l'aimant (1), sur une trajectoire en forme d'arc de cercle (S), concentrique à l'aimant (1). Les composantes utilisées pour le calcul de la position absolue sont les composantes électriques tangentielle et normale notées Vt et Vn, images des composantes magnétiques Bt et Bn. Selon le diamètre de lecture (S), on peut avantageusement choisir les composantes axiale (Va) et tangentielle (Vt) pour des raisons d'amplitude d'induction ou de précision du capteur.

Sur la figure 9b, on peut constater les améliorations apportées par l'utilisation du gain G de l'invention par rapport à l'utilisation du coefficient k de l'art antérieur. Pour une longueur angulaire d'aimant (1) de 30°, 40°, 50° et 70°, la meilleure non-linéarité obtenue passe respectivement de +/-2.53% à +/-0.14%, de +/-5.3% à +/-0.13%, de +/-3.7% à +/-0.45% et de +/-0.24% à +/-0.04%.

La figure 10 représente la vue schématique d'un troisième exemple de réalisation d'un système de mesure de position absolue angulaire, à aimant tuile. Dans ce cas, la sonde (2) est positionnée sur une trajectoire (S), concentrique au rayon de courbure de l'aimant (1), mais sur un rayon plus petit que ce rayon de courbure. En effet, une trajectoire (S) d'un rayon plus petit que la rayon de courbure, induit des résultats différents en terme de facteur correctif à appliquer du fait que le déplacement développé est moins important que si la trajectoire (S) est d'un rayon plus grande que le rayon de courbure de l'aimant (1).

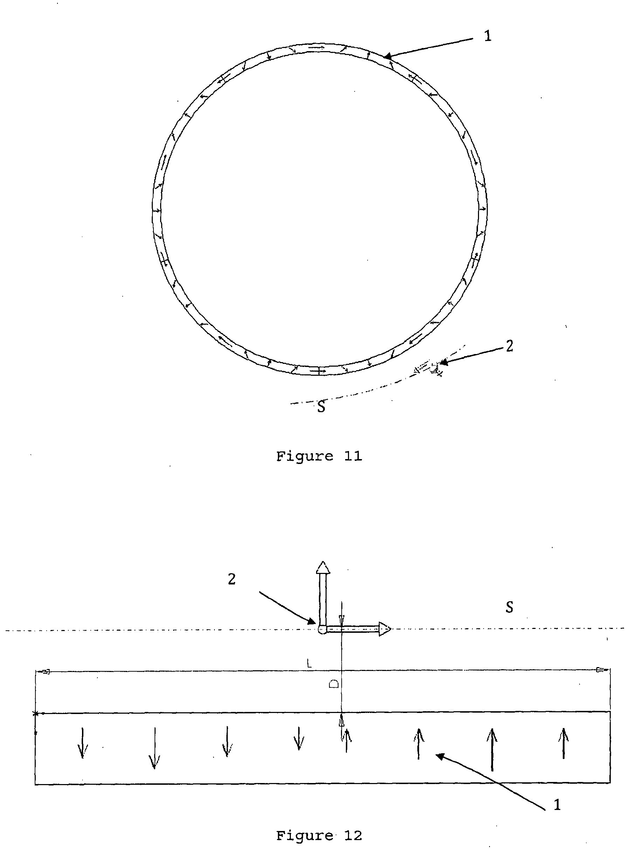

La figure 11 présente une configuration de capteur selon l'invention constitué d'un aimant bague (1) présentant une aimantation multipolaire dont la direction varie continument. On peut en effet constater que la bague présente 5 périodes aimantées d'angle mécanique de 72°. Sur chaque période, on peut constater que la rotation de la direction de l'aimantation vaut 360°. La sonde (2) positionnée au voisinage de la surface de l'aimant permet ainsi de décoder la position angulaire sur les 5 périodes lors de la rotation de l'aimant par rapport à la sonde ou de la sonde par rapport à l'aimant. Le capteur de position ne fournit alors plus une position absolue sur 360° d'angle de rotation mais une position absolue sur une période de 72°. Ce type de configuration d'aimant multipolaire permet par exemple de fournir une position absolue sur la période électrique d'un moteur. La précision du codeur influence le rendement du moteur ou encore la stabilité du couple dynamique fourni par ce dernier. L'invention permet d'améliorer ces 2 facteurs par l'emploi du gain adapté.

On présente en figure 12 une variante du type d'aimantation. A la différence de l'aimantation dont la direction varie continument, l'aimantation proposée ici est réalisé via une modulation de l'amplitude d'aimantation qui varie continument selon une direction unique, celle correspondant au déplacement du capteur. La encore même si cette aimantation permet l'obtention de signaux électriques quasi sinusoïdaux, l'introduction d'un gain différent du rapport des amplitudes des 2 signaux mesurées préalablement au calcul de l'arc tangente autorise une précision accrue.

La présente invention, détaillé ici et illustrés sur quelques exemples n'est bien sûr pas limitée aux capteurs selon une direction de déplacement. Sur le même principe que celui décrit ci-dessus pour une direction de déplacement, un capteur suivant deux directions de déplacement (on parle de capteurs 2D) est réalisable à l'aide d'une ou plusieurs sondes en utilisant les 3 composantes (tangentielle et les deux normales) du champ magnétique crée au point de mesure.

## Revendications

1. Système de mesure de position absolue comportant un aimant permanent, et au moins une sonde en mouvement relatif par rapport audit aimant sur une course donnée, ledit aimant engendrant, au niveau de la sonde, un champ magnétique présentant une première composante magnétique $B_t$, appelée tangentielle, selon la direction de déplacement et une deuxième composante magnétique $B_n$, appelée nor-

male, et orthogonale à la première composante et en quadrature, ladite sonde délivrant deux signaux électriques $V_n$, $V_t$ fonctions desdites composantes respectivement $B_n$, Bt, ainsi que des moyens de calcul fournissant une information de position calculée en fonction de 1'arctangente du rapport entre lesdits signaux $V_n$, $V_t$ affecté d'un coefficient de correction fixe **caractérisé en ce que** ledit moyen de calcul est paramétré pour appliquer au rapport entre les signaux $V_n$, $V_t$ un gain fixe G non nul pour compenser les harmoniques dues aux effets de bord ou à l'imperfection de l'aimantation ou de l'aimant, le gain G étant strictement différent de k, où k désigne le rapport $Vmax_t$ / $Vmax_n$ où $Vmax_t$ et $Vmax_n$ représentent respectivement l'amplitude du signal $V_t$ et $V_n$ sur ladite course, le gain fixe G étant calculé pour minimiser des écarts entre des valeurs de position issues des composantes magnétiques et des valeurs de position mécanique réelles correspondantes, et **en ce que** l'aimant permanent présente une direction d'aimantation qui varie continûment selon la direction de déplacement ou une aimantation à direction unique dont l'intensité varie continûment selon la direction de déplacement.

2. Système de mesure de position absolue selon la revendication 1 **caractérisé en ce que** ledit moyen de calcul est paramétré pour appliquer à l'un des signaux $V_n$, $V_t$ un gain fixe G compris entre 0,4k et 0,98k.

3. Système de mesure de position absolue selon la revendication 1 ou la revendication 2 **caractérisé en ce que** ledit moyen de calcul est paramétré pour appliquer à l'un des signaux $V_n$, $V_t$ un gain fixe G compris entre 1.02k et 2.5k.

4. Système de mesure de position absolue selon l'une quelconque des revendications 1 à 3 **caractérisé en ce que** ledit capteur magnétique comprend au moins deux éléments à effet Hall.

5. Système de mesure de position absolue selon l'une quelconque des revendications 1 à 3 **caractérisé en ce que** ledit capteur magnétique comprend au moins deux paires d'éléments à effet Hall associés à un concentrateur de flux.

6. Système de mesure de position absolue selon l'une au moins des revendications précédentes **caractérisé en ce que** l'aimant permanent est tubulaire.

7. Système de mesure de position absolue selon l'une au moins des revendications 1 à 5 **caractérisé en ce que** l'aimant permanent est semi-tubulaire en forme de tuile. 1

8. Système de mesure de position absolue selon l'une au moins des revendications 1 à 5 **caractérisé en ce que** l'aimant permanent est discal.

9. Système de mesure de position absolue selon l'une au moins des revendications 1 à 5 **caractérisé en ce que** l'aimant permanent est un secteur angulaire.

10. Système de mesure de position absolue selon l'une au moins des revendications 1 à 5 **caractérisé en ce que** l'aimant permanent est parallélépipédique.

11. Système de mesure de position absolue selon la revendication 1 et selon l'une au moins des revendications 4 à 10, lorsque l'aimant permanent présente une direction d'aimantation qui varie continûment selon la direction de déplacement, **caractérisé en ce que** l'aimant permanent est aimanté avec une direction variant entre une direction centrale normale, et des directions tangentielles aux extrémités de la course, la rotation totale de l'angle électrique sur la course étant sensiblement égal à 180°.

12. Système de mesure de position absolue selon la revendication 1 et selon l'une au moins des revendications 4 à 10, lorsque l'aimant permanent présente une direction d'aimantation qui varie continûment selon la direction de déplacement, **caractérisé en ce que** l'aimant permanent est aimanté avec une direction variant entre une direction centrale tangentielle, et des directions tangentielles aux extrémités de la course, la rotation totale l'angle électrique sur la course étant inférieure à 360°.

13. Système de mesure de position absolue selon l'une au moins des revendications 1 à 12 **caractérisé en ce que** l'aimant est de type anisotrope, la direction de l'aimantation étant alignée avec la direction d' anisotropie.

14. Système de mesure de position absolue selon la revendication 13 **caractérisé en ce que** l'aimant présente une anisotropie dont la direction varie continûment.

15. Procédé de paramétrage d'un système de mesure de position absolue conforme à l'une au moins des revendications précédentes consistant à déterminer la valeur maximale $Vmax_n$, $Vmax_t$ desdits signaux $V_n$, $V_t$ sur la course utile, à calculer un coefficient k égal au rapport $Vmax_t$ / $Vmax_n$ et à fixer un gain fixe G non nul strictement différent de k avant le calcul d'arctangente .

16. Procédé de paramétrage d'un système de mesure de position absolue conforme à l'une au moins des revendications 1-14 **caractérisé en ce que** l'on mesure les signaux $V_n$ et $V_t$, que l'on calcule la position magnétique par arctangente du rapport $V_n$ / $V_t$ et que

l'on procède à la minimisation de l'écart entre les valeurs de position magnétique calculés par arctangente et les valeurs de position mécanique réelle, pour déterminer le coefficient de gain fixe G.

17. Procédé de mise en oeuvre d'un système de mesure de position absolue conforme à l'une quelconque des revendications 1 à 14, **caractérisé en ce qu'**il comprend une opération préliminaire d'étalonnage consistant à établir, par mesure ou par simulation et pour une pluralité de positions relatives différentes de la sonde et de l'aimant, une loi liant la mesure X de chacune de ces positions relatives au rapport $V_n / V_t$ des signaux électriques $V_n$ et $V_t$ obtenus pour cette position relative X, une opération préliminaire d'optimisation consistant à déterminer la valeur du gain fixe G pour laquelle les écarts, obtenus pour la pluralité de positions relatives, entre les différentes mesures de X et les différentes valeurs correspondantes de la fonction $C.\text{Arctg}(G \cdot V_n / V_t)$ où C est une constante de construction connue, sont minimaux, et une opération ultérieure d'exploitation, consistant à assimiler la mesure X d'une position relative quelconque de la sonde et de l'aimant valeur de la fonction $C.\text{Arctg}(G \cdot V_n / V_t)$.

**Patentansprüche**

1. System zur Messung der Absolutposition, welches einen Dauermagneten umfasst und mindestens eine Sonde, die im Verhältnis zu besagtem Magneten auf einem bestimmten Hub in Bewegung ist, wobei besagter Magnet an der Sonde ein Magnetfeld erzeugt, welches eine erste magnetische Komponente $B_t$, genannt Tangentialkomponente, in der Bewegungsrichtung, und eine zweite magnetische Komponente $B_n$, genannt Normalkomponente, orthogonal zur ersten Komponente in Quadratur aufweist, wobei besagte Sonde in Abhängigkeit von den besagten Komponenten $B_n$, $B_t$ zwei elektrische Signale $V_n$, $V_t$ liefert, sowie Berechnungsmittel, die eine Information zur berechneten Position liefern unter Berücksichtigung des Arcustangens des Verhältnisses zwischen besagten Signalen $V_n$, $V_t$, auf welches ein feststehender Berichtigungsfaktor angewendet wird, und dadurch, dass besagtes Berechnungsmittel so parametriert ist, dass auf das Verhältnis zwischen den Signalen $V_n$ und $V_t$ eine feste Verstärkung G ungleich Null angewendet werden kann, um die auf die Kanteneffekte oder auf die Unvollkommenheit der Magnetisierung oder des Magneten zurückzuführenden Harmonischen auszugleichen, wobei sich die Verstärkung G streng von k unterscheidet, k das Verhältnis $V\text{max}_t / V\text{max}_n$ bezeichnet und $V\text{max}_t$ und $V\text{max}_n$ jeweils die Amplitude des Signals $V_t$ und $V_n$ auf besagtem Hub darstellen, wobei die feste Verstärkung G so berechnet wird, dass Abweichungen zwischen den Positionswerten der magnetischen Komponenten und den entsprechenden tatsächlichen Werten der mechanischen Position auf ein Minimum reduziert werden, und dadurch, dass der Dauermagnet eine Magnetisierungsrichtung aufweist, die sich in der Bewegungsrichtung kontinuierlich verändert, oder eine einzige Magnetisierungsrichtung, deren Intensität sich in der Bewegungsrichtung kontinuierlich verändert.

2. System zur Messung der Absolutposition nach Anspruch 1, **dadurch gekennzeichnet, dass** besagtes Berechnungsmittel so parametriert wird, dass auf eines der Signale $V_n$ und $V_t$ eine feste Verstärkung G zwischen 0,4 k und 0,98k angewendet werden kann.

3. System zur Messung der Absolutposition nach Anspruch 1 oder Anspruch 2, **dadurch gekennzeichnet, dass** besagtes Berechnungsmittel so parametriert wird, dass auf eines der Signale $V_n$, $V_t$ eine feste Verstärkung G zwischen 1,02k und 2,5k angewendet werden kann.

4. System zur Messung der Absolutposition nach einem der Ansprüche 1 bis 3, **dadurch gekennzeichnet, dass** besagter Magnetsensor mindestens zwei Elementenpaare mit Hall-Effekt enthält.

5. System zur Messung der Absolutposition nach einem der Ansprüche 1 bis 3, **dadurch gekennzeichnet, dass** besagter Magnetsensor mindestens zwei Elementenpaare mit Hall-Effekt enthält, die mit einem Flusskonzentrator verbunden sind.

6. System zur Messung der Absolutposition nach mindestens einen der vorhergehenden Ansprüche, **dadurch gekennzeichnet, dass** der Dauermagnet röhrenförmig ist.

7. System zur Messung der Absolutposition nach mindestens einem der Ansprüche 1 bis 5, **dadurch gekennzeichnet, dass** der Dauermagnet halbrohr- und ziegelförmig ist. 1

8. System zur Messung der Absolutposition nach mindestens einen der Ansprüche 1 bis 5, **dadurch gekennzeichnet, dass** der Dauermagnet scheibenförmig ist.

9. System zur Messung der Absolutposition nach mindestens einem der Ansprüche 1 bis 5, **dadurch gekennzeichnet, dass** der Dauermagnet ein Winkelabschnitt ist.

10. System zur Messung der Absolutposition nach mindestens einem der Ansprüche 1 bis 5, **dadurch gekennzeichnet, dass** der Dauermagnet quaderförmig ist.

**11.** System zur Messung der Absolutposition nach Anspruch 1 und nach mindestens einem der Ansprüche 4 bis 10, wenn der Dauermagnet eine einzige Magnetisierungsrichtung aufweist, die sich in der Bewegungsrichtung kontinuierlich verändert, **dadurch gekennzeichnet, dass** der Dauermagnet in einer Richtung magnetisiert ist, die zwischen einer zentralen normalen Richtung und tangentialen Richtungen an den Enden des Hubs variiert, wobei die Gesamtdrehung des elektrischen Winkels auf dem Hub im Wesentlichen gleich 180° ist.

**12.** System zur Messung der Absolutposition nach Anspruch 1 und mindestens einem der Ansprüche 4 bis 10, wenn der Dauermagnet eine einzige Magnetisierungsrichtung aufweist, die sich in Bewegungsrichtung kontinuierlich verändert, **dadurch gekennzeichnet, dass** der Dauermagnet in einer Richtung magnetisiert wurde, die zwischen einer zentralen tangentialen Richtung und tangentialen Richtungen an den Enden des Hubs variiert, wobei die Gesamtdrehung des elektrischen Winkels auf dem Hub kleiner 360° ist.

**13.** System zur Messung der Absolutposition nach mindestens einem der Ansprüche 1 bis 12, **dadurch gekennzeichnet, dass** der Magnet anisotrop ist, wobei die Magnetisierungsrichtung auf die Richtung der Anisotropie ausgerichtet ist.

**14.** System zur Messung der Absolutposition nach Anspruch 13, **dadurch gekennzeichnet, dass** der Magnet eine Anisotropie aufweist, deren Richtung kontinuierlich variiert.

**15.** Parametrierungsverfahren für ein System zur Messung der Absolutposition nach mindestens einem der vorhergehenden Ansprüche, **dadurch gekennzeichnet, dass** der maximale Wert $Vmax_n$ und $Vmax_t$ der besagten Signale $V_n$ und $V_t$ auf dem nominalen Hub ermittelt wird, ein Faktor k gleich dem Verhältnis $Vmax_t/Vmax_n$ berechnet wird und eine streng von k abweichende feste Verstärkung G ungleich Null festgelegt wird, bevor der Arcustangens berechnet wird.

**16.** Verfahren zum Anwendung eines Systems zur Messung der Absolutposition gemäß einem der Ansprüche 1 bis 14, **dadurch gekennzeichnet, dass** man die Signale $V_n$ und $V_t$ misst, man die magnetische Position des Verhältnisses $V_n/V_t$ über den Arcustangens berechnet und man die Abweichungen zwischen den über den Arcustangens berechneten Werten der magnetischen Position und den Werten der tatsächlichen mechanischen Position auf ein Minimum reduziert, um den festen Verstärkungsfaktor G zu ermitteln.

**17.** Verfahren zum Anwendung eines Systems zur Messung der Absolutposition gemäß einem der Ansprüche 1 bis 14, **dadurch gekennzeichnet, dass** in einem einleitenden Eichvorgang durch Messung oder Simulation für eine Vielzahl unterschiedlicher Positionen der Sonde und des Magneten ein Gesetz erstellt wird, in dem die Messung X jeder dieser relativen Positionen mit dem Verhältnis $V_n/V_t$ der für diese relative Position X erzielten elektrischen Signale in Zusammenhang gebracht werden, in einem einleitenden Optimierungsvorgang der Wert der festen Verstärkung G ermittelt wird, bei dem die Abweichungen bei den meisten relativen Positionen zwischen den verschiedenen Messungen von X und den verschiedenen entsprechenden Werten der Funktion $C.Arctg(G \cdot V_n / V_t)$, in der C eine bekannte Konstruktionskonstante ist, möglichst gering sind, und in einer späteren Auswertung die Messung X einer beliebigen relativen Position der Sonde und des Magneten mit dem Wert der Funktion $C.Arctg(G \cdot V_n / V_t)$ gleichgesetzt wird.

**Claims**

**1.** Absolute position measurement system comprising a permanent magnet and at least one sensor in relative movement in relation to said magnet over a given path, wherein said magnet generates, at the level of the sensor, a magnetic field having a first magnetic component $B_t$, designated tangential, according to the direction of movement and a second magnetic component $B_n$, designated normal and orthogonal to the first component and in quadrature, said sensor delivering two electrical signals $V_n$, $V_t$ functions of said components respectively $B_n$, $B_t$, in addition to calculation means providing position information calculated as a function of the arctangent of the ratio between said signals $V_n$, $V_t$ assigned a fixed correction coefficient, **characterised in that** said calculation means is configured to apply to the ratio between the signals $V_n$, $V_t$ a non-null fixed gain G to compensate for harmonics due to edge effects or imperfection of the magnetisation or the magnet, the gain G being strictly different from k, where k denotes the ratio $Vmax_t / Vmax_n$ where $Vmax_t$ and $Vmax_n$ respectively represent the amplitude of the signal $V_t$ and $V_n$ over said path, the fixed gain G being calculated to minimise differences between position values derived from the magnetic components and the corresponding actual mechanical position values and **in that** the permanent magnet has a magnetisation direction that varies continuously according to the direction of movement or a single direction magnetisation, the intensity of which varies continuously according to the direction of movement.

**2.** Absolute position measurement system according to claim 1, **characterised in that** said calculation means are parameterised to apply a fixed gain G of between 0.4k and 0.98k to one of the signals $V_n$, $V_t$.

**3.** Absolute position measurement system according to claim 1 or claim 2, **characterised in that** said calculation means are parameterised to apply a fixed gain G of between 1.02k et 2.5k to one of the signals $V_n$, $V_t$.

**4.** Absolute position measurement system according to any one of claims 1 to 3, **characterised in that** said magnetic sensor comprises at least two Hall-effect elements.

**5.** Absolute position measurement system according to any one of claims 1 to 3, **characterised in that** said magnetic sensor comprises at least two pairs of Hall-effect elements associated with a flux concentrator.

**6.** Absolute position measurement system according to at least one of the preceding claims, **characterised in that** said permanent magnet is tubular.

**7.** Absolute position measurement system according to at least one of claims 1 to 5, **characterised in that** the permanent magnet is semi-tubular in the form of a tile.

**8.** Absolute position measurement system according to at least one of claims 1 to 5, **characterised in that** the permanent magnet is discal.

**9.** Absolute position measurement system according to at least one of claims 1 to 5, **characterised in that** the permanent magnet is an angular sector.

**10.** Absolute position measurement system according to at least one of claims 1 to 5, **characterised in that** the permanent magnet is parallelepipedal.

**11.** Absolute position measurement system according to claim 1 and according to at least one of claims 4 to 10, wherein the permanent magnet has a magnetisation direction that varies continuously according to the direction of movement, **characterised in that** the permanent magnet is magnetised with a direction varying between a normal central direction and tangential directions at the ends of the path, with the total rotation of the electrical angle over the path being substantially equal to 180°.

**12.** Absolute position measurement system according to claim 1 and according to at least one of claims 4 to 10, wherein the permanent magnet has a magnetisation direction that varies continuously according to the direction of movement, **characterised in that** the permanent magnet is magnetised with a direction varying between a tangential central direction and tangential directions at the ends of the path, with the total rotation of the electrical angle over the path being substantially equal to 360°.

**13.** Absolute position measurement system according to at least one of claims 1 to 12, **characterised in that** the magnet is of anisotropic type, with the magnetisation direction being aligned with the anisotropic direction.

**14.** Absolute position measurement system according to claim 13, **characterised in that** the magnet has an anisotropy, the direction of which varies continuously.

**15.** Method for parameterising an absolute position measurement system according to at least one of the preceding claims, involving determining the maximum value $Vmax_n$, $Vmax_t$ of the said signals $V_n$, $V_t$ over the useful path, calculating a coefficient k equal to the ratio $Vmax_t$ / $Vmax_n$ and establishing a non-null fixed gain G strictly different from k before calculating the arctangency.

**16.** Method for parameterising an absolute position measurement system according to at least one of claims 1-14, **characterised in that** the signals $V_n$ and $V_t$ are measured, the magnetic position is calculated by arctangent of the ratio $V_n$ / $V_t$ and the differences between the magnetic position values calculated by arctangent and the actual mechanical position values are minimised in order to determine the fixed gain coefficient G.

**17.** Method for implementing an absolute position measurement system according to any of claims 1 to 14, **characterised in that** it comprises a preliminary calibration operation involving establishing, by measurement or simulation and for a plurality of different relative positions of the sensor and the magnet, a law linking the measurement X of each of these positions relative to the ratio $V_n$ / $V_t$ of the electrical signals $V_n$ and $V_t$ obtained for this relative position X, a preliminary optimisation operation involving determining the value of the fixed gain G for which the differences, obtained for the plurality of relative positions, between the different measurements of X and the corresponding different values of the function $C.Arctg(G \cdot V_n / V_t)$ where C is a known construction constant, are minimal and a subsequent operation of utilisation, involving assimilating the measurement X of any relative position of the sensor and the magnet value of the function $C. Arctg(G.. V_n / V_t)$.

Figure 1

Densité de flux à 3,5 mm de la surface de l'aimant (24 mm x 5 mm x 3 mm)
Magnétisation sinusoïdale au milieu-course 28 mm

Position linéaire (mm)

Figure 2

Figure 3a

Figure 3b

Figure 3c

| | Cas # | Dimensions aimant LxLAxH [mm] | Espace D [mm] | k=b1/a1 | G=λk | λ | Non-linéarité ±[%] pour G | Non-linéarité ±[%] pour k |
|---|---|---|---|---|---|---|---|---|
| | 1 | 20x10x4 | 6.5 | 0.76 | 0.9 | 1.19 | 0.53 | 2.66 |
| | 2 | 24x10x4 | 6.5 | 0.76 | 0.87 | 1.13 | 0.21 | 1.42 |
| | 3 | 28x10x4 | 6.5 | 0.78 | 0.81 | 1.04 | 0.17 | 0.52 |
| | 4 | 32x10x4 | 6.5 | 0.81 | 0.78 | 0.96 | 0.05 | 0.46 |
| | 5 | 20x5x3 | 3.5 | 0.47 | 1.05 | 2.24 | 0.94 | 9 |
| T au centre | 6 | 24x5x3 | 3.5 | 0.65 | 0.76 | 1.16 | 0.62 | 1.3 |
| | 7 | 28x5x3 | 3.5 | 0.73 | 0.68 | 0.94 | 0.08 | 0.47 |
| | 8 | 32x5x3 | 3.5 | 0.71 | 0.65 | 0.92 | 0.09 | 0.7 |
| | 9 | 20x5x3 | 2.0 | 0.49 | 0.93 | 1.88 | 1.78 | 6.7 |
| | 10 | 24x5x3 | 2.0 | 0.57 | 0.81 | 1.42 | 2.13 | 2.8 |
| | 11 | 28x5x3 | 2.0 | 0.64 | 0.6 | 0.93 | 1.14 | 1.34 |
| | 12 | 32x5x3 | 2.0 | 0.65 | 0.58 | 0.9 | 0.32 | 0.73 |

Figure 4

| Cas # | Dimensions aimant LxLAxH [mm] | Espace D [mm] | k=b1/a1 | G=λk | λ | Non-linéarité ±[%] pour G | Non-linéarité ±[%] pour k |
|---|---|---|---|---|---|---|---|
| 13 | 20x10x4 | 6.5 | 0.57 | 0.79 | 1.38 | 0.1 | 3.39 |
| 14 | 24x10x4 | 6.5 | 0.52 | 0.69 | 1.30 | 0.08 | 3.7 |
| 15 | 28x10x4 | 6.5 | 0.52 | 0.62 | 1.18 | 0.02 | 1.81 |
| 16 | 32x10x4 | 6.5 | 0.51 | 0.53 | 1.03 | 0.04 | 0.3 |
| 17 | 20x5x3 | 3.5 | 0.5 | 0.47 | 0.94 | 0.27 | 0.6 |
| 18 | 24x5x3 | 3.5 | 0.49 | 0.39 | 0.8 | 0.12 | 2.65 |
| 19 | 28x5x3 | 3.5 | 0.48 | 0.35 | 0.72 | 0.1 | 3.7 |
| 20 | 32x5x3 | 3.5 | 0.48 | 0.3 | 0.63 | 0.29 | 4.6 |
| 21 | 20x5x3 | 2.0 | 0.55 | 0.31 | 0.56 | 0.6 | 6 |
| 22 | 24x5x3 | 2.0 | 0.55 | 0.27 | 0.49 | 0.33 | 9 |
| 23 | 28x5x3 | 2.0 | 0.52 | 0.27 | 0.51 | 0.48 | 8.35 |
| 24 | 32x5x3 | 2.0 | 0.49 | 0.31 | 0.64 | 0.67 | 5.3 |

N au centre

Figure 5

Figure 6a

Figure 6b

| Cas # | Dimensions aimant ODxIDxH [mm] | Espace [mm] | k=b1/a1 | G=λk | λ | Non-linéarité ±[%] pour G | Non-linéarité ±[%] pour k |
|---|---|---|---|---|---|---|---|
| 25 | 20x10x2.5 | 3.0 | 0.44 | 0.67 | 1.53 | 0.41 | 3.62 |

Figure 6c

Figure 7a

Figure 7b

| Cas # | Dimensions aimant ODxIDxH [mm] | Espace [mm] | k=b1/a1 | G=λk | λ | Non-linéarité ±[%] pour G | Non-linéarité ±[%] pour k |
|---|---|---|---|---|---|---|---|
| 26 | 7x5x3.5 | 3.16 | 0.44 | 0.46 | 1.03 | 0.04 | 0.28 |

Figure 7c

Figure 8a

| | Cas # | dimensions aimant [mm] | Espace D [mm] | k=b1/a1 | G=λk | λ | Non-linéarité ±[%] pour G | Non-linéarité ±[%] pour k |
|---|---|---|---|---|---|---|---|---|
| N au centre | | 90°x10x2 | 2.2 | 0.48 | 0.36 | 0.76 | 1.0 | 4.0 |
| | | 100°x10x2 | 2.2 | 0.44 | 0.41 | 0.92 | 0.65 | 1.51 |
| | | 120°x10x2 | 2.2 | 0.55 | 0.50 | 0.92 | 0.39 | 0.9 |

Figure 8b

Figure 9a

| | Cas # | dimensions aimant [mm] | Espace D [mm] | k=b1/a1 | G=λk | λ | Non-linéarité ±[%] pour G | Non-linéarité ±[%] pour k |
|---|---|---|---|---|---|---|---|---|
| **N au centre** | | 30°x5x3 | 2.2 | 0.53 | 0.43 | 0.81 | 0.14 | 2.53 |
| | | 40°x5x3 | 2.2 | 0.52 | 0.33 | 0.63 | 0.13 | 5.3 |
| | | 50°x5x3 | 2.2 | 0.45 | 0.29 | 0.65 | 0.45 | 3.7 |
| | | 70°x5x3 | 2.2 | 0.71 | 0.73 | 1.03 | 0.04 | 0.24 |

Figure 9b

Figure 10

Figure 11

Figure 12

**EP 2 622 310 B2**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 7741839 B
- US 7030608 B
- FR 2893410
- EP 1989505 A